# EUROPEAN PATENT SPECIFICATION

(11) **EP 3 921 114 B1**
(45) Date of publication and mention of the grant of the patent: **11.01.2023**
(21) Application number: 20706073.2
(22) Date of filing: 04.02.2020
(51) Int. Cl.: B23P 19/02

(54) **EXCTRACTOR OF TUBE BUNDLES FOR HEAT EXCHANGERS**
EXTRAKTOR VON WÄRMETAUSCHERBÜNDELN
EXTRACTEUR DE FAISCEAUX D'ECHANGEURS DE CHALEUR

(30) Priority: 08.02.2019 IT 201900001825
(43) Date of publication of application: 15.12.2021
(73) Proprietor: Maus Italia S.P.A., 26010 Bagnolo Cremasco (CR) (IT)
(72) Inventor: AGOSTINO, Stefano, 26013 Crema (IT); PERTOT, Ladislao, 26012 Castelleone (CR) (IT)
(74) Representative: Mari, Marco Giovanni
(86) International application number: PCT/IT2020/050018
(87) International publication number: WO 2020/161756

(56) References cited:
- JP-A- H07 223 134
- US-A- 3 257 001
- US-A- 3 954 187
- US-A- 4 227 854

## Description

### Technical field

The invention relates to the heavy mechanical engineering sector. More in detail, the invention concerns an extractor of tube bundles for heat exchangers according to the preamble of claim 1.

### Background art

The main maintenance and inspection operations to be carried out on heat exchangers, for example in petrochemical plants, are the extraction, movement, washing and reinsertion of the respective tube bundles.

Currently, extractors, whether of aerial or of self-positioning type, substantially comprise a track, a motorized pick-up head for the tube bundles, adapted to slide reversibly on said track and provided with at least one pusher adapted to cooperate with the tube bundles both during their extraction and during their insertion into the shell of the heat exchangers; motor means for movement of said pick-up head, and one or more intermediate support carriages for said tube bundles, also adapted to slide in a reversible manner on said track, but idly.

An example of an extractor of tube bundles as described above is known from document US 3 954 187 A. This document discloses the features of the preamble of claim 1.

During insertion of the bundle into the shell, the main operations are carried out by the pick-up head with its central pusher.

Finally, when the tube bundle has substantially been fully inserted, it is necessary to check that it is perfectly aligned inside the shell of the heat exchanger and that the tubesheet is perfectly aligned with the end section of the shell.

In fact, the tube bundle and the end plate can be slightly rotated with respect to the axis of the shell, with the risk of damaging the heat exchanger.

If during subsequent extraction and re-insertion the tube bundle is not perfectly aligned with the shell of the heat exchanger, or the tubesheet is not perfectly orthogonal to the axis of said heat exchanger, there would in fact be the risk of the parts interlocking with one another, making it impossible to carry out maintenance operations and, in the worst case scenario, making it necessary to cut the tubes.

To date, the operations of orientation and rotation of the tube bundle complete with sheet inside the shell are carried out manually by operators, using wooden struts and wedges. By pressing on the tubesheet locally, this promotes its rotation around the point in which pressure is exerted.

The weight and the dimensions of the whole tube bundle to be oriented can be considerable and the operator cannot always manage to impart the correct pressure manually using a wooden strut.

### Presentation of the invention

The invention aims to overcome these limits, by producing an extractor of tube bundles that is functional, efficient, solid, extremely practical to use and adaptable to any shape, geometry and dimension of the tube bundles, to facilitate any maintenance operation of the tube bundles, protecting them from damage.

These objects are achieved with an extractor of tube bundles for heat exchangers comprising:
- a track with a longitudinal axis;
- a pick-up head for a tube bundle adapted to slide reversibly on said track and comprising a pusher adapted to cooperate with a tubesheet of said tube bundle both during its extraction from and during its insertion into the shell of said heat exchanger;

- motor means adapted to supply a hydraulic circuit for movement of said pick-up head;
- at least one idle support carriage for said tube bundle, adapted to slide in a reversible manner on said track,
characterized in that said pick-up head comprises a first and a second telescopic strut, rotatingly laterally associable at their first end with said pick-up head, arranged symmetrically with respect to a vertical plane passing through the longitudinal axis of said track,
where said first and said second telescopic strut each comprise first actuator means adapted to allow their rotation in the vertical plane containing them,
and where said struts are adapted to cooperate in a thrusting manner with said tubesheet in order to facilitate the phase of orientation and final insertion of the tube bundle into the shell of the heat exchanger.

Preferred embodiments of the extractor are presented in the dependent claims.

In particular, said first actuator means comprise a hydraulic piston driven by a hydraulic pump, placed between each strut and each side of said pick-up head.

Preferably, said first and said second telescopic strut each comprise second actuator means, adapted to allow them to extend as far as the tubesheet upon which they will act.

In particular, said second actuator means comprise a hydraulic piston driven by a hydraulic pump, placed inside each of said struts.

Advantageously, said first and said second actuator means of said first and said second telescopic strut can be driven independently.

In a preferred variant of the invention, said first and said second telescopic strut each comprise a shaped head element.

Advantageously, said head element is interchangeable and said extractor comprises a plurality of shaped head elements different from one another, adapted to cooperate with different portions of said tubesheet.

According to a possible variant of the invention, said first and said second telescopic strut are reversibly associable with said pick-up head.

The extractor of tube bundles according to the invention has many advantages.

Said first and said second strut act, exerting differentiated pressures, on the tubesheet, to promote insertion and orientation of the tube bundle into the heat exchanger, to maintain it always aligned therewith, correcting any misalignments or rotations.

By driving the struts independently, it is possible to obtain the rotation of the tubesheet and hence its re-alignment with the section of the shell of the heat exchanger, before complete closing of said heat exchanger.

Said struts have a completely adjustable position.

A first adjustment concerns the angulation of the struts with respect to the horizontal plane along which the pick-up head advances.

Said first actuator means impart rotation movements to the struts in the vertical plane that contains them, to adapt them perfectly to all the requirements and to any dimension of tube bundle, in order to be able to exert the correct pressure in any point of the sheet.

Even more advantageously, said first actuator means allow the struts to be placed in vertical position when not in use, so as not to project frontally beyond the pick-up head and allow the pusher to operate on the bundle during the initial insertion operations without the lateral encumbrance of the struts.

A second adjustment is instead required to move the struts toward the tubesheet until they come into contact with it and takes place by means of the second actuator means that act on the telescopic portions that form said struts.

The plurality of shaped and interchangeable head elements for each strut are useful to allow better cooperation with the tubesheet according to the pressure point, whether this is at the flow divider or at the clamping bolts.

### Brief description of the drawings

The advantages of the invention will be more apparent below, in the description of a preferred embodiment, provided by way of nonlimiting example, and with the aid of the drawings, wherein:
Figs. 1, 2 and 3 represent, respectively in a side view, a top plan view and an axonometric view, an extractor of tube bundles for heat exchangers according to the invention;
Figs. 4 and 5 represent, respectively in an axonometric side view and a longitudinal section, a component of the extractor of Fig. 1;
Fig. 6 represents a detail of the section of Fig. 5;
Fig. 7 represents, in a partially exploded axonometric view, a detail of the component of Fig. 4;
Fig. 8 represents, in a side view, an extractor of tube bundles for heat exchangers according to a possible variant of the invention.

### Detailed description of a preferred embodiment of the invention

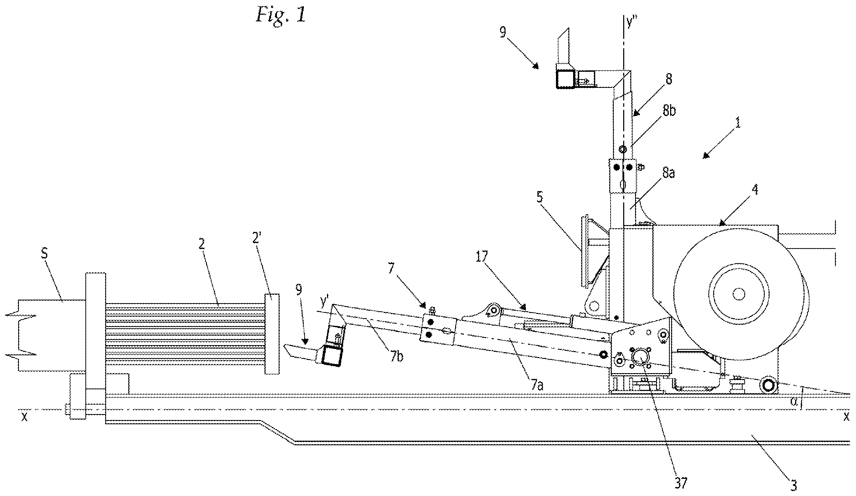

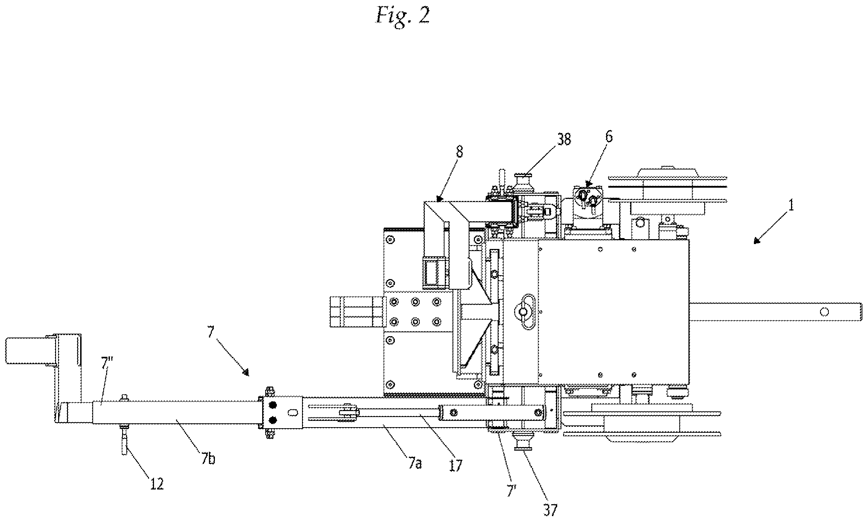

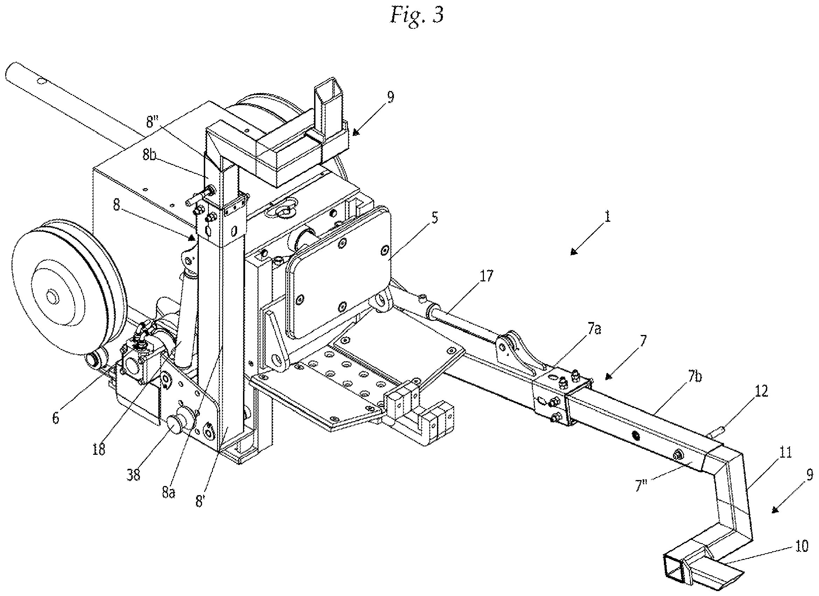

With reference to Figs. 1-3, there is illustrated an extractor 1 of tube bundles 2 for heat exchangers S.

The tube bundles 2 comprise a plurality of parallel tubes along a main longitudinal axis, having the ends blocked by a first and a second tubesheet, and a plurality of diaphragms interposed between said two tubesheets.

Said extractor 1 substantially comprises:
- a track 3 with a horizontal axis x, acting as a frame, adapted to be placed parallel to the main axis of the heat exchanger S and of the tube bundle 2 contained inside it;
- a pick-up head 4 for said tube bundle 2 adapted to slide in a reversible manner on said track 3;
- motor means adapted to supply a hydraulic circuit for movement of said pick-up head 4;
- a plurality of support carriages (not illustrated) for said tube bundle 2, adapted to slide in an idle and reversible manner on said track 3.

Said pick-up head 4 in turn comprises a pusher 5 adapted to cooperate with a tubesheet 2'of said tube bundle 2 both during its extraction from and during its insertion into the shell of said heat exchanger.

Said pick-up head 4 further comprises a first 7 and a second 8 strut, each having a first 7', 8' and a second 7", 8" end.

Said struts 7, 8 are adapted to cooperate in a thrusting manner with the outermost tubesheet 2' of the heat exchanger in order to facilitate the phase of final insertion of the tube bundle 2 into its shell.

Said first 7 and second 8 strut are of telescopic type and each comprise two portions 7a, 7b, 8a, 8b sliding with respect to one another to increase or decrease their extension.

Said first 7 and second 8 telescopic strut are rotatingly associated, at their first end 7', 8' along the sides of said pick-up head 4, and are arranged symmetrically with respect to a vertical plane π passing through the longitudinal axis x of said track 3.

In particular, said first 7 and second 8 telescopic strut comprise hinged connection means 37, 38 to said pick-up head 4 adapted to allow said struts 7, 8 a rotation substantially through 90° with respect to the horizontal plane of said track 3, so that it can assume, in addition to an inclined working position, also a vertical idle position.

In Figs. 1-3, said first strut 7 is in a working configuration and its longitudinal axis y' forms, with the horizontal plane of said track 3, an acute angle α. Said angle α is variable according to the point of the tubesheet 2' on which the thrust is to be applied on order for the tube bundle 2 and said tubesheet to be oriented correctly inside the shell of the heat exchanger.

Said second strut 8 is instead in an idle configuration and its longitudinal axis y" forms, with the horizontal plane of said track, a right angle. Said second strut 8 does not encumber the space in front of the pusher 5 and this configuration is necessary during the first phase of insertion of the tube bundle 2 into the shell, when it is only the pusher 5 that is acting.

Said first 7 and second 8 telescopic strut are also reversibly associated with said pick-up head 4 so that they can be easily removed therefrom during maintenance operations or during operations to extract tube bundles in limited spaces.

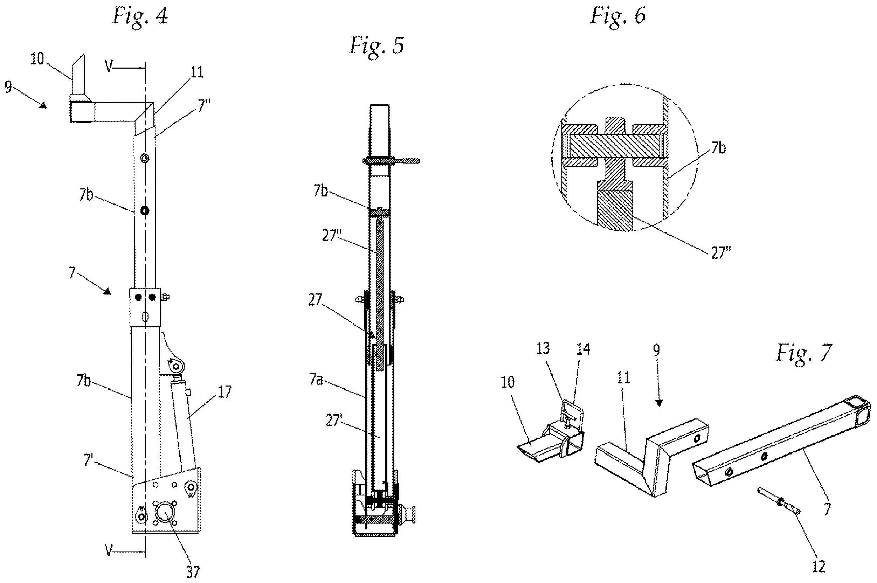

With particular reference to Fig. 4, said first 7 and said second 8 telescopic strut each comprise first actuator means adapted to allow their rotation movement in the vertical plane containing them.

Said first actuator means comprise double-acting hydraulic pistons 17, 18 connected to a hydraulic circuit 6 and operated by a hydraulic pump, placed between said struts 7, 8 and the sides of said pick-up head 4.

With particular reference to Fig. 5, said first 7 and said second 8 telescopic strut each comprise second actuator means, adapted to allow their first 7a, 8a and second 7b, 8b portions to slide mutually and to allow them to extend toward the tubesheet 2' upon which they will act.

Said second actuator means comprise double-acting hydraulic pistons 27, 28 driven by a hydraulic pump, placed inside said struts 7, 8.

In particular, said pistons 27, 28 comprise a first end 27', 28' associated with the first portion 7a, 8a of said struts 7, 8 and a second end 27", 28" associated with their second portion 7b, 8b (detail Fig. 6).

Alternatively, both said first actuator means and said second actuator means could comprise electric actuators.

Said first 7 and said second 8 telescopic strut each comprise a shaped head element 9 that will act, in a thrusting manner, on the tubesheet 2'.

With particular reference to the exploded view of Fig. 7, said head element 9 substantially comprises a wedge 10 reversibly associable with the second end 7", 8" of the corresponding strut 7, 8.

Said wedge 10 is inserted by means of a shaped connection arm 11, into the second end 7", 8" of the strut 7, 8 and is fixed by means of a pin 12. Said wedge 10 is instead stably associate with said shaped connection arm 11 by means of screw clamping means 13.

Said shaped connection arm 11 allows the wedge 10 to be placed in front of the tubesheet 2', with respect to the outermost lateral position of the body of its telescopic strut.

To facilitate movement of said wedges 10 handles 14 are provided.

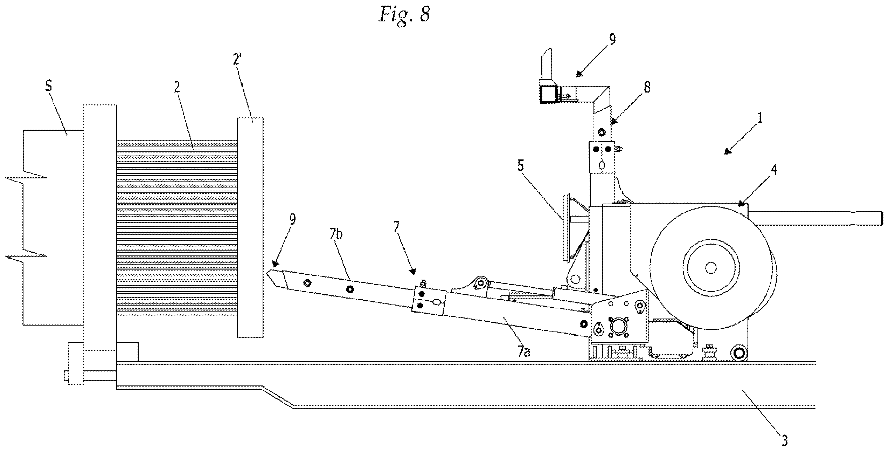

Said head elements 9 are interchangeable and said extractor 1 comprises a plurality of shaped head elements 9 different from one another, adapted to cooperate with different portions of said tubesheet, or with tube bundles 2 of different dimension, for example for much larger heat exchangers S as illustrated in the variant of Fig. 8.

By way of example, said head elements 9 can comprise wedges 10 of different shape and shaped connection arms 11 of different dimension and length.

Operation of the extractor 1 of tube bundles 2 for heat exchangers according to the invention is described below.

Firstly, the extractor 1 is positioned at the same height as the heat exchanger, with the struts 7, 8 placed in vertical position.

The pick-up head 4 is then made to slide on the track 3 driven by said motor means 6, moving it toward the tubesheet 2' until it is acting thereon by means of said pusher 5.

After reaching the position of maximum insertion of the tube bundle 2 into the shell, said first 7 and second 8 strut start to operate.

According to the rotation to be imparted to the tubesheet 2', one or the two struts 7, 8 is moved, rotating it by means of the corresponding first actuator means 17, 18, so that its longitudinal axis y', y" produces with the horizontal plane of the track 3 a preferred and suitable acute angle α.

Subsequently, the corresponding second actuator means 27, 28 are driven to adjust the length of the strut 7, 8 acting on its telescopic portions 7a, 7b, 8a, 8b so that its head element 9 rests against the tubesheet 2'.

Finally, said second actuator means 27, 28 continue in their thrusting effect so that the strut 7, 8 exerts a pressure on a point of the tubesheet 2' promoting a minimum rotation for its adjustment and facilitating the phase of final insertion of the tube bundle 2 into the heat exchanger.

## Claims

1. Extractor (1) of tube bundles (2) for heat exchangers (S) comprising:
- a track (3) with a longitudinal axis (x);
- a pick-up head (4) for a tube bundle (2) adapted to slide reversibly on said track (3) and comprising a pusher (5) adapted to cooperate with a tubesheet (2') of said tube bundle (2) both during its extraction from and during its insertion into the shell of said heat exchanger;
- motor means adapted to supply a hydraulic circuit for movement of said pick-up head (4);
- at least one idle support carriage for said tube bundle (2), adapted to slide in a reversible manner on said track (3),
**characterized in that** said pick-up head (4) comprises a first (7) and a second (8) telescopic strut, rotatingly laterally associable at their first end (7', 8') with said pick-up head (4), arranged symmetrically with respect to a vertical plane passing through the longitudinal axis of said track (x),
where said first (7) and said second (8) telescopic strut each comprise first actuator means adapted to allow their rotation in the vertical plane containing them,
and where said struts (7, 8) are adapted to cooperate in a thrusting manner with said tubesheet (2') in order to facilitate the phase of orientation and final insertion of the tube bundle (2) into the shell of the heat exchanger.

2. Extractor (1) of tube bundles (2) according to claim 1, **characterized in that** said first actuator means comprise a hydraulic piston (17, 18) driven by a hydraulic pump, placed between each strut (7, 8) and each side of said pick-up head (4).

3. Extractor (1) of tube bundles (2) according to claim 1, **characterized in that** said first (7) and said second (8) telescopic strut each comprise second actuator means, adapted to allow them to extend as far as the tubesheet (2') upon which they will act.

4. Extractor (1) of tube bundles (2) according to claim 3, **characterized in that** said second actuator means comprise a hydraulic piston (27, 28) driven by a hydraulic pump, placed inside each of said struts (7, 8).

5. Extractor (1) of tube bundles (2) according to claims 1 and 3, **characterized in that** said first (17, 18) and said second (27, 28) actuator means of said first (7) and said second (8) telescopic strut can be driven independently.

6. Extractor (1) of tube bundles (2) according to claim 1, **characterized in that** said first (7) and said second (8) telescopic strut each comprise a shaped head element (9).

7. Extractor (1) of tube bundles (2) according to claim 6, **characterized in that** said head element (9) is interchangeable and said extractor (1) comprises a plurality of shaped head elements (9) different from one another, adapted to cooperate with different portions of said tubesheet (2').

8. Extractor (1) of tube bundles (2) according to claim 1, **characterized in that** said first (7) and said second (8) telescopic strut are reversibly associable with said pick-up head (4).

## Patentansprüche

1. Extraktor (1) von Wärmetauscherbündeln (2, S) umfassend:
- eine Schiene (3) mit einer Längsachse (x);
- einen Aufnahmekopf (4) für ein Rohrbündel (2), geeignet, reversibel auf der besagten Schiene (3) zu gleiten, und umfassend einen Schieber (5), geeignet, mit einer Rohrplatte (2') des Rohrbündels (2) sowohl während seiner Entnahme aus als auch während seines Einsetzens in den Mantel des besagten Wärmetauschers zusammenzuwirken;
- Motormittel, geeignet, einen Hydraulikkreislauf für die Bewegung des besagten Aufnahmekopfs (4) bereitzustellen;
- mindestens einen leerlaufenden Tragschlitten für das besagte Rohrbündel (2), geeignet, auf der besagten Schiene (3) reversibel zu gleiten,
**dadurch gekennzeichnet, dass** der besagte Aufnahmekopf (4) eine erste (7) und eine zweite (8) Teleskopstrebe umfasst, die an ihrem ersten Ende (7', 8') mit dem besagten Aufnahmekopf (4) drehbar seitlich assoziierbar und symmetrisch in Bezug auf eine vertikale Ebene angeordnet sind, die durch die Längsachse der besagten Schiene (x) verläuft,
wobei die besagte erste (7) und die besagte zweite (8) Teleskopstrebe jeweils erste Aktuatormittel umfassen, die geeignet sind, ihre Drehung in der sie enthaltenden vertikalen Ebene zu ermöglichen,
und wobei die besagten Streben (7, 8) geeignet sind, in einer schiebenden Art und Weise mit der besagten Rohrplatte (2') zusammenzuwirken, um die Phase der Ausrichtung und des endgültigen Einsetzens des Rohrbündels (2) in den Mantel des Wärmetauschers zu erleichtern.

2. Extraktor (1) von Rohrbündeln (2) gemäß Anspruch 1, **dadurch gekennzeichnet, dass** die besagten ersten Aktuatormittel einen Hydraulikkolben (17, 18) umfassen, der von einer Hydraulikpumpe angetrieben wird, die zwischen jeder Strebe (7, 8) und jeder Seite des Aufnahmekopfes (4) angeordnet sind.

3. Extraktor (1) von Rohrbündeln (2) gemäß Anspruch 1, **dadurch gekennzeichnet, dass** die besagte erste (7) und die besagte zweite (8) Teleskopstrebe jeweils zweite Aktuatormittel umfassen, geeignet, dass sie sich so weit wie die Rohrplatte (2'), auf die sie einwirken, ausdehnen können.

4. Extraktor (1) von Rohrbündeln (2) gemäß Anspruch 3, **dadurch gekennzeichnet, dass** die besagten zweiten Aktuatormittel einen Hydraulikkolben (27, 28) umfassen, der von einer Hydraulikpumpe angetrieben wird, die in jeder der besagten Streben (7, 8) angeordnet sind.

5. Extraktor (1) von Rohrbündeln (2) gemäß Anspruch 1 und 3, **dadurch gekennzeichnet, dass** die besagten ersten (17, 18) und die besagte zweiten (27, 28) Aktuatormittel der besagten ersten (7) und der besagten zweiten (8) Teleskopstrebe unabhängig voneinander angetrieben werden können.

6. Extraktor (1) von Rohrbündeln (2) gemäß Anspruch 1, **dadurch gekennzeichnet, dass** die besagte erste (7) und die besagte zweite (8) Teleskopstrebe jeweils ein geformtes Kopfelement (9) umfassen.

7. Extraktor (1) von Rohrbündeln (2) gemäß Anspruch 6, **dadurch gekennzeichnet, dass** das besagte Kopfelement (9) austauschbar ist und der besagte Extraktor (1) eine Vielzahl von unterschiedlich geformten Kopfelementen (9) umfasst, geeignet, mit verschiedenen Abschnitten der besagten Rohrplatte (2') zusammenzuwirken.

8. Extraktor (1) von Rohrbündeln (2) gemäß Anspruch 1, **dadurch gekennzeichnet, dass** die besagte erste (7) und die besagte zweite (8) Teleskopstrebe reversibel mit dem besagten Aufnahmekopf (4) assoziierbar sind.

## Revendications

1. Extracteur (1) de faisceaux tubulaires (2) pour échangeurs de chaleur (S) comprenant :
- un rail (3) avec un axe longitudinal (x) ;
- une tête de préhension (4) pour un faisceau tubulaire (2) adaptée pour coulisser de manière réversible sur ledit rail (3) et comprenant un poussoir (5) adapté pour coopérer avec une plaque tubulaire (2') dudit faisceau tubulaire (2) à la fois pendant son extraction et pendant son insertion dans la calandre dudit échangeur de chaleur ;
- des moyens moteurs adaptés pour alimenter un circuit hydraulique pour le déplacement de ladite tête de préhension (4) ;
- au moins un chariot de support libre pour ledit faisceau tubulaire (2), adapté pour glisser de manière réversible sur ledit rail (3),
**caractérisé par le fait que** ladite tête de préhension (4) comprend une première (7) et une seconde (8) béquilles télescopiques, pouvant être associées latéralement en rotation à leur première extrémité (7', 8') avec ladite tête de préhension (4), disposées symétriquement par rapport à un plan vertical passant par l'axe longitudinal dudit rail (x),
où ladite première (7) et ladite seconde (8) béquilles télescopiques comprennent chacune des premiers moyens d'actionnement adaptés pour permettre leur rotation dans le plan vertical qui les contient,
et où lesdites béquilles (7, 8) sont adaptées pour coopérer en poussée avec ladite plaque tubulaire (2') afin de faciliter la phase d'orientation et d'insertion finale du faisceau tubulaire (2) dans la coque de l'échangeur de chaleur.

2. Extracteur (1) de faisceaux tubulaires (2) selon la revendication 1, **caractérisé par le fait que** lesdits premiers moyens d'actionnement comprennent un piston hydraulique (17, 18) entraîné par une pompe hydraulique, placé entre chaque béquille (7, 8) et chaque côté de ladite tête de préhension (4).

3. Extracteur (1) de faisceaux tubulaires (2) selon la revendication 1, **caractérisé par le fait que** ladite première (7) et ladite seconde (8) béquilles télescopiques comprennent chacune des seconds moyens d'actionnement, adaptés pour leur permettre de s'étendre aussi loin que la plaque tubulaire (2') sur laquelle elles vont agir.

4. Extracteur (1) de faisceaux tubulaires (2) selon la revendication 3, **caractérisé par le fait que** lesdits seconds moyens d'actionnement comprennent un piston hydraulique (27, 28) entraîné par une pompe hydraulique, placé à l'intérieur de chacune desdites béquilles (7, 8).

5. Extracteur (1) de faisceaux tubulaires (2) selon les revendications 1 et 3, **caractérisé par le fait que** lesdits premier (17, 18) et second (27, 28) moyens d'actionnement de ladite première (7) et de ladite seconde (8) béquille télescopique peuvent être commandés indépendamment.

6. Extracteur (1) de faisceaux tubulaires (2) selon la revendication 1, **caractérisé par le fait que** ladite première (7) et ladite seconde (8) béquille télescopique comprennent chacune un élément de tête façonné (9).

7. Extracteur (1) de faisceaux tubulaires (2) selon la revendication 6, **caractérisé par le fait que** ledit élément de tête (9) est interchangeable et que ledit extracteur (1) comprend une multitude d'éléments de tête (9) de forme différente les uns des autres, adaptés pour coopérer avec différentes parties de ladite plaque tubulaire (2').

8. Extracteur (1) de faisceaux tubulaires (2) selon la revendication 1, **caractérisé par le fait que** ladite première (7) et ladite seconde (8) béquille télescopique peuvent être associées de manière réversible à ladite tête de préhension (4).
